# EUROPEAN PATENT APPLICATION

(11) **EP 3 730 825 A1**
(43) Date of publication of application: **28.10.2020**
(21) Application number: 20170557.1
(22) Date of filing: 21.04.2020
(51) Int. Cl.: F16L 3/123, H02G 3/32

(54) **SYSTEMS AND METHODS FOR A BRACKET FOR A NAIL GUN**

(30) Priority: 23.04.2019 US 201962837596 P
(71) Applicant: Erico International Corporation, Solon, OH 44139 (US)
(72) Inventor: LE ROUX, Adrien, Saint Etienne (FR); WILSON, Eric J., Solon, OH 44139 (US)
(74) Representative: Barker Brettell LLP

(57) **Abstract**

Brackets (100, 700, etc.) can be configured to support an object relative to a substrate of concrete or other materials. For example, a bracket (700) can have a contact member (710) configured to contact the substrate and can be configured to receive a nail. The bracket can also have a first arm (720) and a second arm (730) coupled to the contact member (710) opposite each other, the first arm (720) including a first arm slot (722) and the second arm (730) including a second arm slot (732). The first arm and the second arm (720, 730) can be configured to receive the barrel (10) of a nail gun therebetween, with the first arm slot and the second arm slot (722, 732) configured to receive the barrel (10) of the nail gun therein.

## Description

### BACKGROUND

In many applications it may be useful to fixedly support raceways, including conduit, such as electric metallic tube (EMT) conduit, or cable, such as metal clad (MC) cable, relative to a substrate such as concrete. In some contexts, support of the raceways and cables must be provided at least at or within specified distances along a support structure and within specified distances from a junction box or other termination point as required by code. It may also useful to fixedly support other objects relative to substrates, including threaded rods, support lines (e.g., wires or metal cables), and so on.

### SUMMARY

Some embodiments of the disclosure provide a bracket for supporting an object relative to a substrate of concrete or other materials. The bracket can be configured to be secured to the substrate by a nail gun with a barrel. The bracket can have a contact member configured to be secured against the substrate and the contract member can have a first hole configured to receive a nail. The bracket can also have a first arm and a second arm. The first arm can be coupled to the contact member and can include a sidewall portion extending from the contact member and an arcuate portion extending from the sidewall portion. The arcuate portion can have a first arm slot. The second arm can be coupled to the contact member opposite the first arm. The second arm can include a planar portion extending from the contact member in parallel with the sidewall portion and an arcuate portion extending from the planar portion opposite the contact member. The arcuate portion of the second arm can have a second arm slot. The arcuate portion of the first arm and the arcuate portion of the second arm can extend toward each other, then bend toward the contact member, and continue to bend away from each other, from a perspective extending from the sidewall portion and the planar portion, respectively, to free ends of the first and second arms. The arcuate portions can be configured to receive and hold the barrel of the nail gun therebetween to secure the bracket to the nail gun for installation, with the first arm slot and the second arm slot receiving the barrel of the nail gun therein.

Other embodiments of the disclosure provide a bracket for supporting an object relative to a substrate of concrete or other materials. The bracket can be secured to the substrate by a nail gun with a barrel. The bracket can include a contact member configured to be secured to the substrate with a nail. The bracket can also have a barrel engagement mechanism with spring arms coupled to the contact member and configured to releasably engage the barrel of the nail gun therebetween to secure the barrel, each of the spring arms having a slot configured to at least partially receive an exterior surface of the barrel of the nail gun to secure the bracket to the barrel for installation of the bracket onto the substrate with the nail gun.

Yet other embodiments of the disclosure provide a method for securing an object to a substrate of concrete or other materials using a nail gun with a barrel. The barrel of the gun can be engaged with the first and second spring arms of an integrally formed bracket so that the exterior of the barrel extends within and along first and second slots that extend along arcuate portions of the first and second spring arms. With the barrel engaged with the first and second spring arms, the bracket can be secured to a substrate with the nail gun. After securing the bracket to the substrate, the nail gun can be removed from the bracket by pulling the barrel out of the first and second slots. The object can be attached to the bracket.

Features which are described in the context of separate aspects and/or embodiments of the invention may be used together and/or be interchangeable wherever possible. Similarly, where features are, for brevity, described in the context of a single embodiment, those features may also be provided separately or in any suitable sub-combination. Features described in connection with the system may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate embodiments of the disclosure and, together with the description, serve to explain the principles of embodiments of the disclosure:
FIGS. 1 and 2 are top front isometric views of a bracket in an installation configuration, according to an embodiment of the disclosure;
FIG. 3 is a bottom front isometric view of the bracket of FIG. 1 in an installation configuration;
FIG. 3A is a bottom front isometric view of the bracket of FIG. 1 in an installation configuration and secured to a barrel of a nail gun;
FIG. 4 is a front elevation view of the bracket of FIG. 1;
FIGS. 5 and 6 are top front isometric views of the bracket of FIG. 1 in a support configuration;
FIG. 7 is a bottom front isometric view of the bracket of FIG. 5;
FIG. 8 is a front elevation view of the bracket of FIG. 5;
FIG. 9 is a top front isometric view of a bracket in an installation configuration according to another embodiment of the disclosure;
FIG. 10 is a top front isometric view of a bracket in an installation configuration according to another embodiment of the disclosure;
FIG. 11 is a top front isometric view of a bracket in an installation configuration according to another embodiment of the disclosure;
FIG. 12 is a top front isometric view of the bracket of FIG. 11 in a support configuration;
FIG. 13 is a bottom isometric view of a bracket in an installation configuration, according to another embodiment of the disclosure, and secured to a barrel of a nail gun; and
FIG. 14 is a top front isometric view of a bracket in an installation configuration according to another embodiment of the disclosure;
FIG. 14A is a bottom front isometric view of the bracket of FIG. 14 in an installation configuration and secured to a barrel of a nail gun;
FIG. 15 is a top front isometric view of the bracket of FIG. 14 in a support configuration;
FIG. 16 is a top front isometric view of two ganged brackets of FIG. 14 according to an embodiment of the disclosure;
FIG. 17 is a top front isometric view of a bracket in an installation configuration according to another embodiment of the disclosure;
FIG. 18 is a top front isometric view of the bracket of FIG. 17 in a support configuration;
FIG. 19 is a top front isometric view of a mounting bracket according to another embodiment of the disclosure;
FIG. 20 is a bottom front isometric view of the mounting bracket of FIG. 19;
FIG. 21 is a top front isometric view of the mounting bracket of FIG. 19 with support members attached;
FIG. 22 is a top front isometric view of mounting bracket according to another embodiment of the disclosure;
FIG. 23 is a top front isometric view of the mounting bracket of FIG. 22 positioned within a channel support; and
FIG. 24 is a diagram of a method according to an embodiment of the disclosure.

### DETAILED DESCRIPTION

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

As used herein, unless otherwise defined or limited, directional terms are used for convenience of reference for discussion of particular figures or examples. For example, references to downward (or other) directions may be used to discuss aspects of a particular example or figure, but do not necessarily require similar orientation or geometry in all installations or configurations.

The following discussion is presented to enable a person skilled in the art to make and use embodiments of the disclosure. Various modifications to the illustrated embodiments will be readily apparent to those skilled in the art, and the generic principles herein can be applied to other embodiments and applications without departing from embodiments of the disclosure. Thus, embodiments of the disclosure are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the disclosure. Skilled artisans will recognize the examples provided herein have many useful alternatives and fall within the scope of embodiments of the disclosure.

Some of the discussion below describes brackets that can be used to support a conduit or a cable relative to a structure. The context and particulars of this discussion are presented as examples only. For example, embodiments of the disclosed disclosure can be configured in various ways, including with other shapes and arrangements of elements. Similarly, embodiments of the disclosure can be used with arrangements of support members or other assemblies other than those expressly illustrated or described herein. In this regard, for example, some embodiments not expressly discussed below can include some or all of the components of any number of the embodiments expressly described and illustrated below, in any variety of combinations. Further, some embodiments can be employed to support objects other than conduit or cables.

In conventional arrangements, conduit, cable, or other objects can be secured to structures, including concrete structures, in various ways. In some cases, a bracket can be attached to concrete, with a support or other securement mechanism connected thereto, to secure conduit or cable. For example, a bracket with a hole for a nail can be held in place against the concrete surface and a nail gun can be used to drive a nail from the barrel of the nail gun through the hole of the bracket and into the concrete. Conduit or cable (or other objects) can then be supported, directly or indirectly, by the bracket. As another example, a preinstalled nail of a bracket can be received within the barrel of the nail gun and fired into the concrete, thereby securing the bracket to the concrete. Although these conventional arrangements can provide useful support for conduit and cable (or other objects), installation can require the bracket to be held in place against the concrete independently of the nail gun or in addition to any support provided by the nail gun. In some arrangements, a bracket may be configured to be secured to a particular nail gun before installation, but conventional designs are typically limited in this regard to only a single type or size of nail gun or require specialized fittings for the nail guns.

Embodiments of the disclosure can address these or other issues. For example, in some embodiments, a bracket according to the disclosure can provide a relatively simple releasable engagement of the barrel of a nail gun, which can also align the barrel of the nail gun to allow installation of the bracket to a concrete substrate without the need of additional or independent support of the bracket. In some embodiments, the releasable engagement can be configured to be readily used with a wide range of sizes or geometries of nail gun barrels, and without requiring other specialized fittings for the nail guns. For example, brackets with slotted arms according to some embodiments, particularly those with slotted arms having appropriately configured opposing curvature, can readily engage and secure a wide range of sizes of nail gun barrels.

Some embodiments of the disclosure can be releasably engaged with the barrel of the nail gun prior to positioning the bracket in the location to which it will be mounted. In some embodiments, brackets according to the disclosure can be releasably engaged with a nail gun attached to an extension pole, allowing a user to install the bracket to a concrete surface out of reach from the ground.

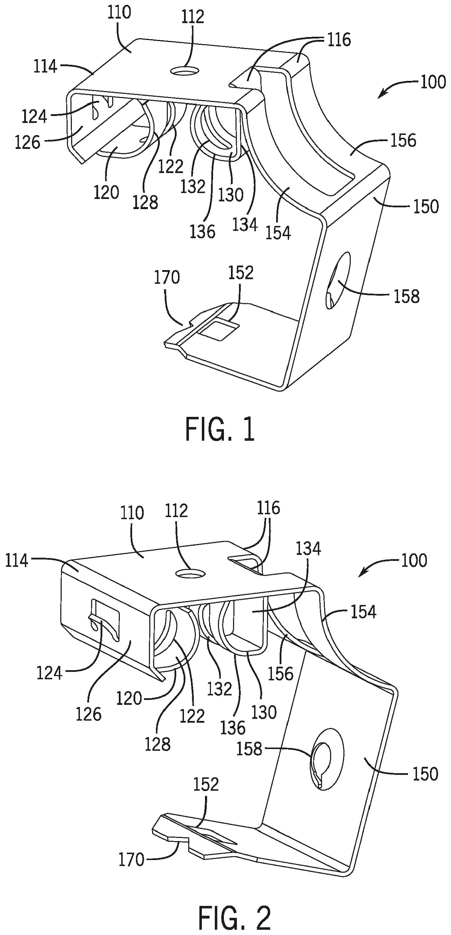

FIGS. 1-4 illustrate an example bracket 100 according to an embodiment of the present disclosure, with the bracket 100 in an open installation configuration. The bracket 100 includes a contact member 110 with a hole 112, a first arm 120 and a second arm 130 extending from the contact member 110, and a support member 150 also extending from the contact member 110.

In the illustrated embodiment, the contact member 110, the first and second arms 120, 130, and the support member 150 are integrally formed as part of a single component that can be formed from spring steel, or other material. This configuration may provide particularly strong and usable brackets. For example, in some cases, spring steel may be particularly suitable, due to its high degree of elasticity and significant load strength, and integral formation can reduce the number of parts that a use is required to manage during installation. In other embodiments, however, other configurations are possible.

In different embodiments, different geometries are possible for the components and features noted above. In the illustrated embodiment, for example, the contact member 110 is substantially planar, extending substantially along a single plane defined by the contact member 110, and has a hole 112. The hole 112 is sized to receive the body of a nail or other type of fastener to hold the contact member 110 in contact with a planar substrate, or to otherwise secure the contact member against a substrate.

Continuing, the first and second arms 120, 130 are configured with opposed arcuate geometry for strong and adaptable engagement with a nail gun barrel. In particular, the first arm 120 has a sidewall portion 126 and an arcuate portion 128. The sidewall portion 126 extends from a first edge 114 of the contact member 110 downward then bending inward at a sidewall distal portion, as may provide a particularly resilient response for the first arm 120, as well as enhanced overall strength and adaptability of the bracket 100. The arcuate portion 128 extends inward from the sidewall distal portion and bends upward toward an under surface 118 of the contact member 110 and continues to bend back in the direction of the sidewall portion 126.

The second arm 130 also has an arcuate portion 136, although the second arm 130 differs in some ways from the first arm 120. For example, a planar portion 134 of the second arm 130 extends downward from proximate a second edge 116 of the contact member 110, substantially parallel with the sidewall portion 126. The arcuate portion 136 extends inward from the planar portion 134 bending inward toward the first arm 120, continuing to bend, along an arcuate path, toward the under surface 118 of the contact member 110, and continuing to bend back in the direction of the planar portion 134 away from the first arm 120 and the arcuate portion 128.

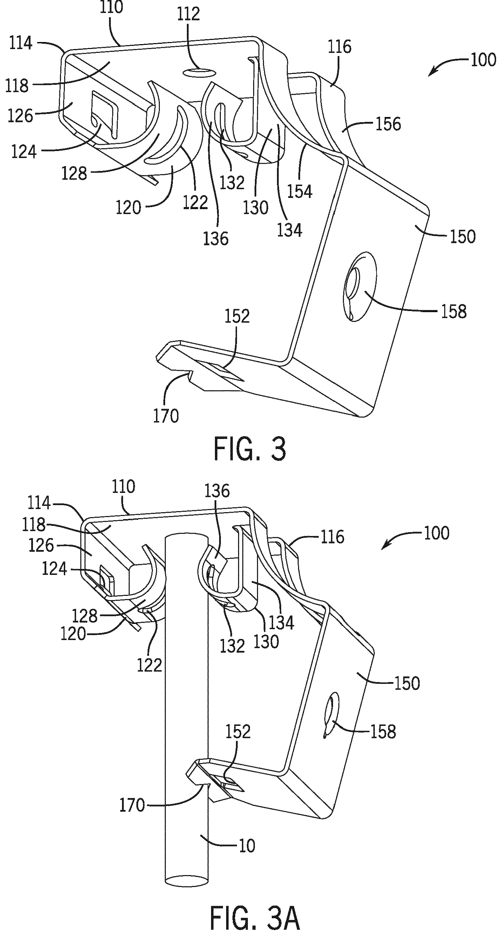

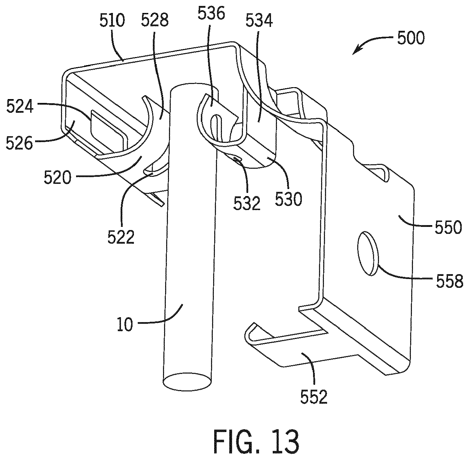

Generally, arms of brackets according to the disclosure can be configured to releasably engage a barrel of a nail gun (see FIG. 13; barrel 10), or other similar objects. For example, the space between the first and second arms 120, 130 defines a gap 140 sized to be smaller than the expected diameter of a barrel of a nail gun, which may range from about 7 mm to about 23 mm. Further, the first and second arms 120, 130 exhibit relatively substantial elasticity, such as may be particularly notable when the bracket 100 is formed from spring steel. Accordingly, when a barrel of appropriate size (e.g., 7 mm to 23 mm in diameter) is received between the first and second arms 120, 130, the elastic response of the first and second arms 120, 130 can induce a biased clamping force onto the barrel. The bracket 100 can thereby be retained upon the barrel by the force exerted by the first and second arms 120, 130, and movement of the barrel relative to the plane defined by the contact member 110 can be resisted. Further, with appropriate engagement of the bracket 100, the barrel can be aligned for accurate and reliable delivery of a nail through the hole 112. An example engagement of the bracket 100 with a barrel 10 of a nail gun is illustrated in FIG. 3A.

In some embodiments, other aspects of bracket arms can also help to engage and retain a barrel of a nail gun (or other object). For example, in the illustrated embodiment of the bracket 100, the first arm 120 has a first arm slot 122 extending along the arcuate portion 128 and the second arm 130 has a second arm slot 132 extending along the arcuate portion 136 The first arm slot 122 and the second arm slot 132 are configured to receive and retain a barrel of a nail gun when the barrel is clamped by the first and second arms 120, 130. The seating of a barrel within the slots 122, 132, or other similar features can help to further secure the barrel for appropriate placement of the bracket 100 and delivery of a nail to the hole 112. Additionally, the first arm slot 122 and the second arm slot 132 can substantially inhibit the nail gun barrel from moving in any direction parallel to the plane defined by the contact member 110, while further encouraging axial alignment of the barrel with the hole 112 of the contact member 110 and allowing easy axial withdrawal of the nail gun barrel from the bracket 100 after installation.

Typically, a barrel of a nail gun has a circular cross-section (e.g., as shown in FIG. 13), which may be suitably engaged by the slots 122, 132 or other slots of appropriate dimensions and geometry. However, slots or other similar features may also appropriately engage barrels (or other objects) with other cross-sectional shapes, including rectangular cross-sections.

In some embodiments, slots can be configured as blind slots (e.g., formed as grooves or recesses that do not extend fully through an arm) as opposed to the open configuration of the slots of 122, 132. In some embodiments, slots can help to regulate the final strength of particular arms, so that the arms can be relatively easily deformed to receive a nail gun barrel while still providing sufficient clamping force to retain the relevant bracket on the barrel.

In some embodiments, arms without slots can be used. However, the adaptability of brackets to accommodate a wide range of barrel sizes and geometries, may be enhanced for some embodiments by the inclusion of appropriate slots (e.g., elongate, opposing, parallel slots similar to the slots 122, 132), including for the reasons discussed above.

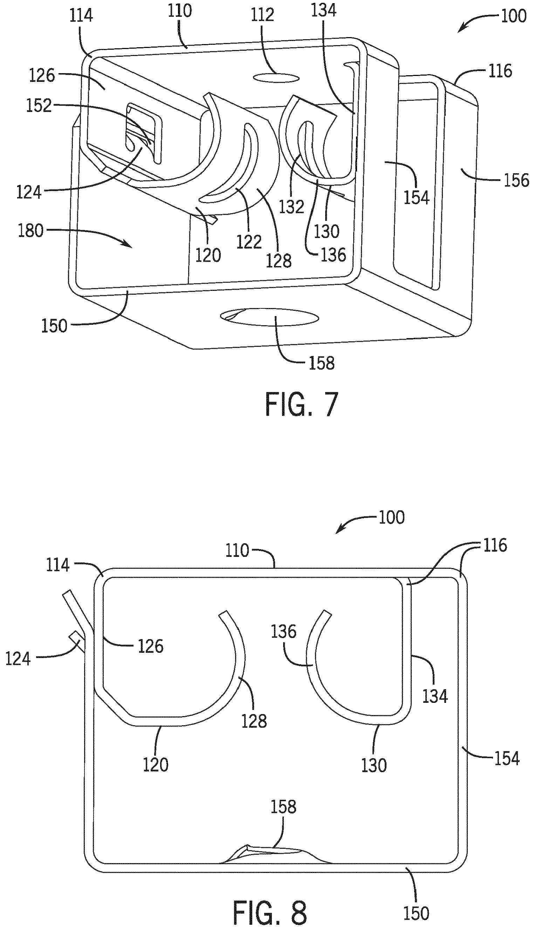

In some embodiments, brackets can include sets of engagement features that can interoperate to releasably (or otherwise) secure the brackets in particular configurations, including configurations for installation and configurations for support of relevant objects relative to a substrate. As shown in FIGS. 1-8, for example, the first arm 120 further includes a first engagement feature in the sidewall portion 126, here shown as a tab 124, adjacent the first edge 114 of the contact member 110 and extending outward in the direction opposite the second arm 130. Further, the support member 150 has a second engagement feature, here shown as an aperture 152. In other embodiments, other engagement features can be used, including engagement features that are arranged at different locations or are configured oppositely from those shown (e.g., with a tab on the support member 150 and an aperture on the sidewall portion 126).

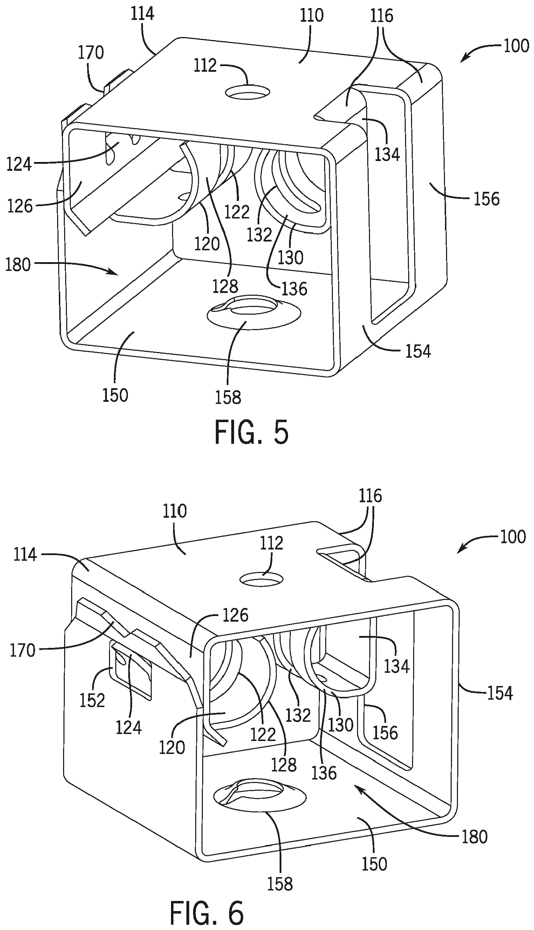

In the illustrated embodiment, the support member 150 is configured to remain resiliently in the open installation configuration shown in FIG. 1, while being capable of being moved manually by a user to other configurations (e.g., the closed support configuration shown in FIG. 5). In this regard, for example, the support member 150 is attached to the second edge 116 of the contact member 110 by a first leg 154 and a second leg 156. The first leg 154 and the second leg 156 are configured to allow the support member 150 to move flexibly relative to, yet remain coupled to, the contact member 110.

In the illustrated embodiment, the geometry of the first and second legs 154, 156 is defined in part by the formation of the second arm 130 out of material of the support member 150. In other embodiments, however, other configurations are possible. In some cases, different embodiments can exhibit different relative dimensions (and other aspects) between legs on a support member and an arm to engage a barrel of a nail gun. In some embodiments, a different number of arms (e.g., zero arms) may be formed from a support portion.

To allow easy installation and secure support of objects relative to a substrate, the bracket 100 is configured to be moved between an open installation configuration and a closed support configuration (e.g., between open and closed configurations). In some embodiments, as also noted above, a bracket can be configured to be manually moved from an open installation configuration to a closed support configuration, or vice versa. In other embodiments, however, the use of tools may be required. Further, some brackets may be configured to be installed and used without being moved between different configurations, other than the movement necessary to engage with and disengaged from a nail gun barrel.

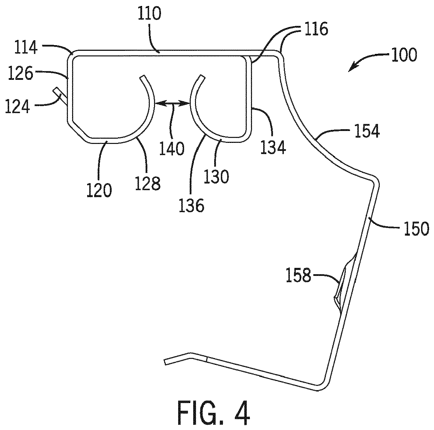

The bracket 100 is shown in an example open installation configuration in FIGS. 1-4. In the open installation configuration, the support member 150 is opened away from the first and second arms 120, 130 to provide clearance for insertion of a nail gun barrel between the first and second arms 120, 130. As illustrated in FIG. 4 in particular, a resting orientation of the support member 150 may sometimes leave the support member 150 in vertical alignment with the gap 140. However, a barrel of a nail gun may generally still be initially inserted partly into the gap 140, then engaged with the support member 150 to further open the support member 150 as the barrel is more fully inserted into (and through) the gap 140.

With the barrel fully inserted through the gap 140 (e.g., seated against the under surface 118 of the contact member 110), an elastic response of the support member 150 can help to further secure the bracket 100 to the barrel. In this regard, for example, the support member 150 also includes a notch 170 that is configured to receive the barrel of the nail gun when the barrel is inserted into the gap 140 (see FIG. 3A). With the notch 170 engaged with a barrel, the force induced on the barrel by the support member 150 can help to further secure the barrel in axial alignment with the hole 112 of the contact member 110.

In other embodiments, however, other configurations are possible. For example, some support members may not be configured to engage a barrel when the barrel is received between two arms of a relevant bracket. As another example, a support member may be configured to be disposed in other configurations during installation, including with the nail gun barrel extending therethrough.

As also noted above, the bracket 100 is shown in an example closed support configuration in FIGS. 5-8. The first and second legs 154, 156 are generally configured to allow movement of the support member 150 relative to the contact member 110, as stated above, allowing the bracket 100 to transition between the open installation configuration and the closed support configuration.

Generally, a closed support configuration can exhibit a variety of geometries or other aspects, depending on the needs of a particular installation. In the closed support configuration of the illustrated embodiment, the support member 150 is closed around an internal volume 180, with the first and second engagement features (i.e., the tab 124 and the aperture 152, respectively) releasably interlocked. Thus, the support member 150 can provide a pass-through support device that is bounded around a continuous perimeter, such as may be suitable to support cable bundles or other similar objects. Further, due to the engagement of the tab 124 and the aperture 152, the support member 150 may be able to support relatively substantially loading without being forced out of the closed support configuration.

As noted above, different embodiments can utilize different engagement features. In some embodiments, a tab and opening similar to the tab 124 and the aperture 152 can provide substantial benefits. For example, due to the generally complementary angles of the tab 124 and the angled end of the support member 150, the support member can be readily pushed along the side of the bracket 110 until the tab 124 snaps into engagement within the opening 152. This may, for example, facilitate manual (or otherwise easy) movement of the bracket 100 into the closed support configuration. Further, due to the expected vertical loading of the bracket 100, and the close proximity of the support member 150 to the base of the tab 124, the tab 124 may be expected to be generally loaded in shear, rather than under bending. This may allow for substantial support strength overall, even for relatively thin material.

In some embodiments, support members can include integral formations or other features that can be used to engage an object for support relative to a substrate. For example, the support member 150 is shown in FIGS. 1-8 with an attachment mechanism, here shown as a thread impression 158. The thread impression 158 is configured to receive a threaded member or fastener for use with a support or other securement mechanism configured to secure a conduit or cable. In other embodiments, other attachment mechanisms can be used.

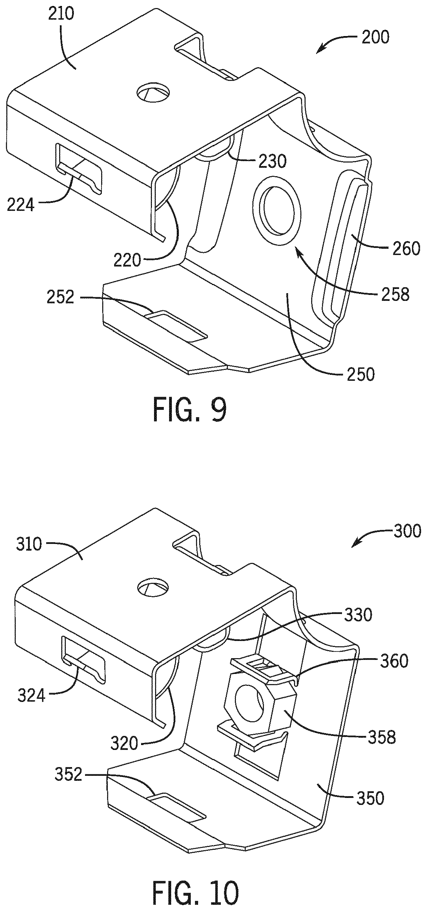

FIG. 9 illustrates another example bracket 200 according to an embodiment the disclosure, as also can be secured to nail gun barrels of a variety of geometries. In many aspects, the bracket 200 is similar to the bracket 100 described above and similar numbering in the 200 series is used for the bracket 200. For example, the bracket 200 has a contact member 210, a first arm 220, and a second arm 230. The first and second arms 220, 230 share similar geometries and features as the first and second arms 120, 130 of the bracket 100 discussed above: i.e., the first and second arms 220, 230 extend from the contact member 210 in a similar manner as the first and second arms 120, 130, the first arm 220 includes a sidewall portion and an arcuate portion with a slot, and the second arm 230 includes a planar portion and an arcuate portion with a slot. The bracket 200 is also configured to be moved from an open installation configuration to a closed support configuration and to be retained in the closed support configuration with the interlocking of a tab 224 and an aperture 252. In some aspects, however, the brackets 100, 200 differ from each other. For example, the support member 250 includes a cable support 258 with flared edges 260 to allow retained cables to bend within specified bend radius requirements.

FIG. 10 illustrates another a bracket 300 according to an embodiment the disclosure, as can also be secured to nail gun barrels of a variety of geometries. In many aspects, the bracket 300 is similar to the brackets 100, 200 described above and similar numbering in the 300 series is used for the bracket 300. For example, the bracket 300 has a contact member 310, a first arm 320, and a second arm 330. The first and second arms 320, 330 share similar geometries and features as the first and second arms 120, 130 of the bracket 100 discussed above: i.e., the first and second arms 320, 330 extend from the contact member 310 in a similar manner as the first and second arms 120, 130, the first arm 320 includes a sidewall portion and an arcuate portion with a slot, and the second arm 330 includes a planar portion and an arcuate portion with a slot. The bracket 300 is also configured to be moved from an open installation configuration to a closed support configuration and to be retained in the closed support configuration with the interlocking of a tab 324 and an aperture 352.

In some aspects, however, the bracket 300 differs from the brackets 100, 200. For example, the support member 350 has an attachment mechanism including a nut 358 secured within inwardly bent slotted tabs that form a nut retention feature 360. A threaded member or fastener for use with a support or other securement mechanism, configured to secure a conduit or cable, can be received within the nut 358.

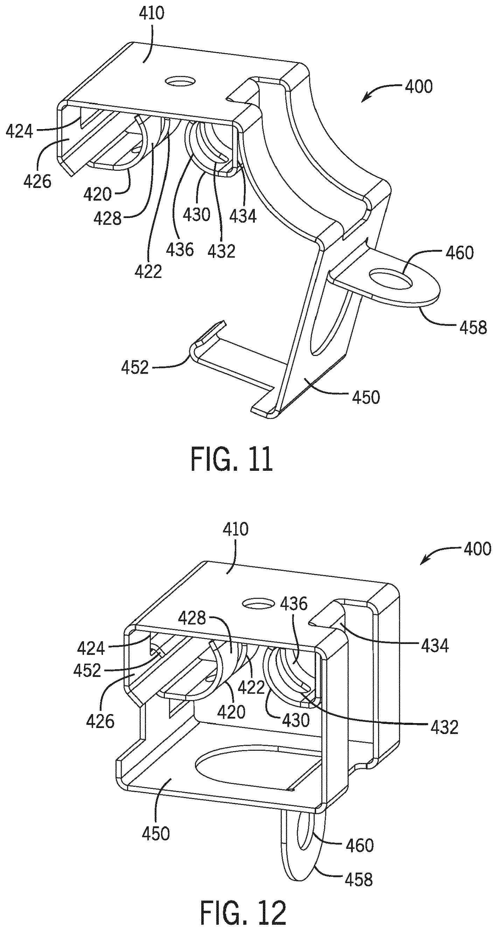

FIGS. 11 and 12 illustrate another bracket 400 according to an embodiment the disclosure, as can also be secured to nail gun barrels of a variety of geometries. In many aspects, the bracket 400 is similar to the brackets 100, 200, 300 described above and similar numbering in the 400 series is used for the bracket 400. For example, the bracket 400 has a contact member 410, a first arm 420, and a second arm 430, and the first and second arms 420, 430 share similar geometries and features as the first and second arms 120, 130 of the bracket 100 discussed above: i.e., the first and second arms 420, 430 extend from the contact member 410 in a similar manner as the first and second arms 120, 130, the first arm 420 includes a sidewall portion 426 and an arcuate portion 428 with a slot 422, and the second arm 430 includes a planar portion 434 and an arcuate portion 436 with a slot 432.

In some aspects, however, the bracket 400 differs from the brackets 100, 200, 300 . For example, the support member 450 has an attachment mechanism including an ear 458 with an ear hole 460 to which a support or other securement mechanism, configured to secure a conduit or other cable, can be riveted. As another example, the first engagement feature is an aperture 424 and the second engagement feature is an elongate tab formed into a hook 452. As illustrated in FIG. 12 in particular, the hook 452 is received within the aperture 424 when the bracket 400 is in the closed support configuration.

In some embodiments, the hook 452 can be configured to engage a barrel of a nail gun similarly to the support member 150 (as discussed above), when the barrel is received between the arms 420, 430. This may be useful, for example, to further secure the barrel in appropriate alignment for installation of the bracket 400. In some embodiments, however, the hook 452 may be configured to be clear of the barrel during installation.

FIG. 13 illustrates another bracket 500 according to an embodiment the disclosure. In many aspects, the bracket 500 is similar to the bracket 400 described above and similar numbering in the 500 series is used for the bracket 500. For example, the bracket 500 has a contact member 510, a first arm 520, and a second arm 530, and the first and second arms 520, 530 share similar geometries and features as the first and second arms 120, 130 of the bracket 100 discussed above: i.e., the first and second arms 520, 530 extend from the contact member 510 in a similar manner as the first and second arms 120, 130, the first arm 520 includes a sidewall portion 526 and an arcuate portion 528 with a slot 522, and the second arm 530 includes a planar portion 534 and an arcuate portion 536 with a slot 532. The bracket 500 is also configured to be moved from an open installation configuration to a closed support configuration and to be retained in the closed support configuration with the interlocking of an aperture 524 and an elongate tab formed as a hook 552, similarly to the bracket 400 (see FIGS. 11 and 12).

In some aspects, however, the bracket 500 differs from the bracket 400. For example, the support member 550 has an attachment mechanism that includes a hole 558. In some cases, a support or other securement mechanism (e.g., configured to secure a conduit or other cable) can be received within the hole 558 to be coupled to the support member 550.

FIG. 13 illustrates the bracket 500 in the open installation configuration, with the barrel 10 of a nail gun releasably engaged with the first arm 520 and the second arm 530 and at least partially received within the first arm slot 522 and the second arm slot 532. Similar engagement of the barrel 10 or other barrels, including barrels of other geometries, can be effected by the brackets 100, 200, 300, 400 discussed above, and others. Further, although the hook 552 is shown as being clear of the barrel 10 in the illustrated configuration, in some embodiments a hook or other support member can be configured to engage the barrel 10, to further stabilize and secure the bracket relative to the barrel 10.

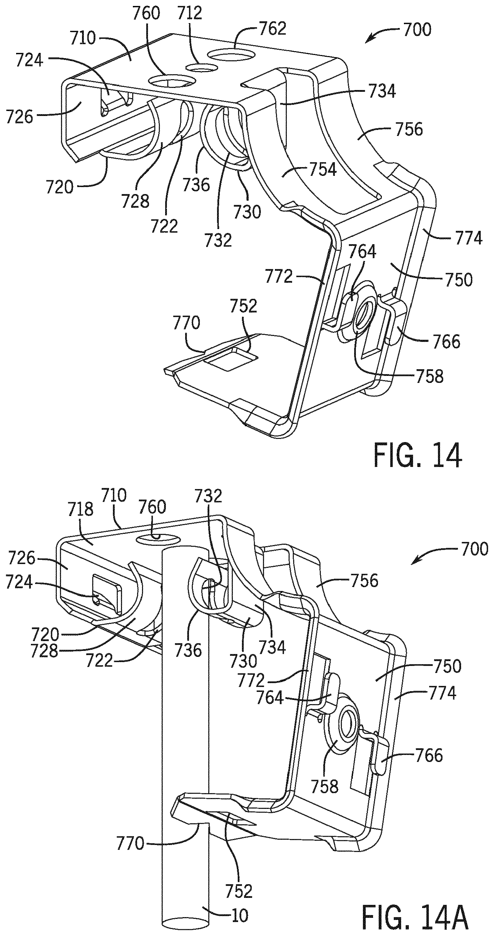

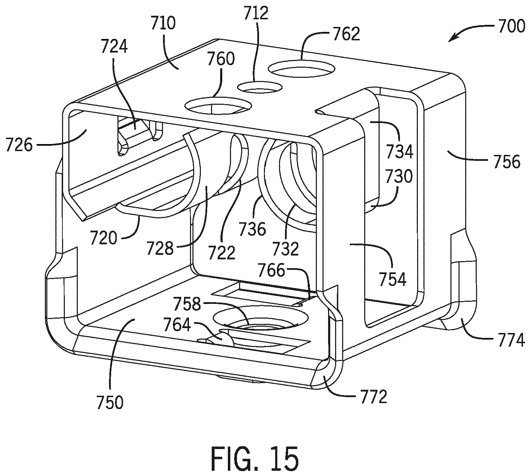

FIGS. 14 and 15 illustrate another embodiment of a bracket 700 according to the disclosure. In many aspects, the bracket 700 is similar to the bracket 100 described above and similar numbering in the 700 series is used for the bracket 700. For example, the bracket 700 has a contact member 710, with an under surface 718, a first arm 720 and a second arm 730 depending from the contact member 710, and a support member 750 coupled to the contact member 710. The first and second arms 720, 730 share the same geometries and features as the first and second arms 120, 130 of the bracket 100 discussed above: i.e., the first and second arms 720, 730 extend from the contact member 710 in a similar manner as the first and second arms 120, 130, the first arm 720 includes a sidewall portion 726 and an arcuate portion 728 with a slot 722 and the second arm 730 includes a planar portion 734 and an arcuate portion 736 with a slot 732. Further, the support member 750 has a notch 770 configured to receive the barrel of the nail gun when the barrel is received between the first and second arms 720, 730. An example engagement of the bracket 700 with a barrel 10 of a nail gun is illustrated in FIG. 14A. The bracket 700 is also configured to be moved from an open installation configuration (FIG. 14) to a closed support configuration (FIG. 15) and to be retained in the closed support configuration with the interlocking of a tab 724 and an aperture 752.

In some aspects, however, the bracket 700 differs from the bracket 100. For example, the support member 750 has an attachment mechanism that includes an attachment hole 758 that is extruded downwardly from the support member 750, extending away from the contact member 710. The attachment hole 758 can have a thread impression in some embodiments, similar to the thread impression 158 of the bracket 100 shown in FIG. 2, or can be configured to engage a self-tapping screw or other type of fastener. In some instances, the attachment hole 758 can be threaded to receive a similarly threaded fastener, for example, an M4, round-head, screw. In some cases, a support or other securement mechanism (e.g., configured to secure a conduit or other cable) can be received within the attachment hole 758 to be coupled to the support member 750. The downwardly extruded configuration of the attachment hole 758 can help to reduce the likelihood of damaging objects, such as cables and other wiring, that are supported by the bracket 700. For example, when wiring is pulled through the bracket 700, with the bracket 700 in the closed support configuration, the wiring insulation will not contact any exposed edges of the attachment hole 758.

In some embodiments, brackets can be configured to be stacked together to provide compound supports, including through tool-less attachment methods. In this regard, for example, the bracket 700 also has a set of anchor holes 760, 762 provided on the contact member 710, linearly spaced across from each other and in alignment with the hole 712. Correspondingly, the bracket 700 also includes a set of catches 764, 766 extending downward from the support member 750. As shown here, the set of catches 764, 766 are formed as hooked tabs that extend in opposing directions (see FIG. 14) and can be integrally formed with the support member 750, although other configurations and methods of manufacture are possible. For example, a set of anchor holes can be provided on the support member 750 and a set of catches can be provided on the contact member 710. In another example, at least one anchor hole and at least one catch can be provided on the contact member 710 and at least one anchor hole and at least one catch can be provided on the support member 750 in a corresponding arrangement with the at least one anchor hole and the at least one catch of the contact member 710 to enable stacking of multiple brackets as described further below. In still another example, each bracket of a set of stackable brackets can include at least one catch and at least one anchor hole, with the catch(es) and anchor hole(s) of each bracket being configured to engage the corresponding anchor hole(s) and catch(es) of the other bracket.

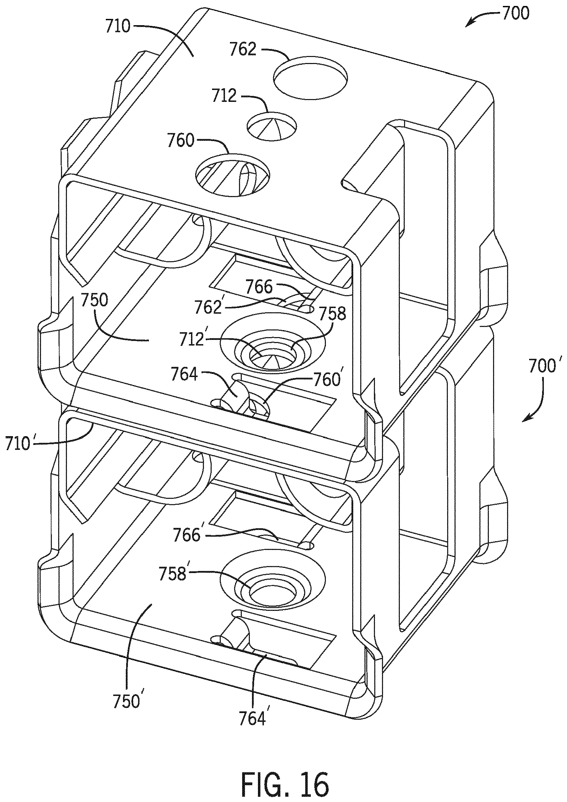

With the illustrated configuration, or other similar arrangements, catches on one instance of a bracket can be readily engaged with anchor holes on another instance of the bracket in order to quickly and easily secure the brackets together. As shown in FIG. 16, for example, a set of brackets 700, 700' can be coupled to provide a stacked assembly, wherein the set of catches 764, 766 of one bracket 700 are received within the set of anchor holes 760', 762' of another bracket 700'. In particular, in the illustrated example, the set of catches 764, 766 can be first inserted partially into the anchor holes 760', 762' with the bracket 700 disposed at an angle relative to the bracket 700' (i.e., rotated out of square alignment relative to a vertical or other common axis). Then the brackets 700, 700' can be rotated relative to each other, bringing the support member 750 closer to the contact member 710' and pivoting the catches 764, 766 within the anchor holes 760', 762' to firmly couple the brackets 700, 700' together with the support member 750 contacting the contact member 710'. Multiple brackets 700 can thereby be stacked without the use of tools.

In some embodiments, appropriately configured catches (e.g., the catches 764, 766) may be sufficiently strong to secure brackets together without the need for additional fasteners. However, in some cases, to further secure the coupling of the brackets 700, 700', a fastener can be received through the hole 712' of the bracket 700' and threaded into the attachment hole 758 of the bracket 700.

The bracket 700 also has rounded edges 772, 774 extending at least partially along the sides of the support member 750. As illustrated in FIGS. 14-16, the rounded edges 772, 774 extend along a portion of the first and second legs 754, 756 and along the support member 750 towards the aperture 752. The rounded edges 772, 774 can help to reduce the likelihood of damaging materials, such as cables and other wiring, supported by the bracket 700. Similar to the recessed attachment hole 758, the rounded edges 772, 774 provide a smooth surface along which the wiring can be pulled through a bracket 700, with the bracket 700 in the closed support configuration, and also provide a smooth surface when supporting wiring that drops vertically from the bracket 700 so as to make significant weighted contact with at least one of the rounded edges 772, 774.

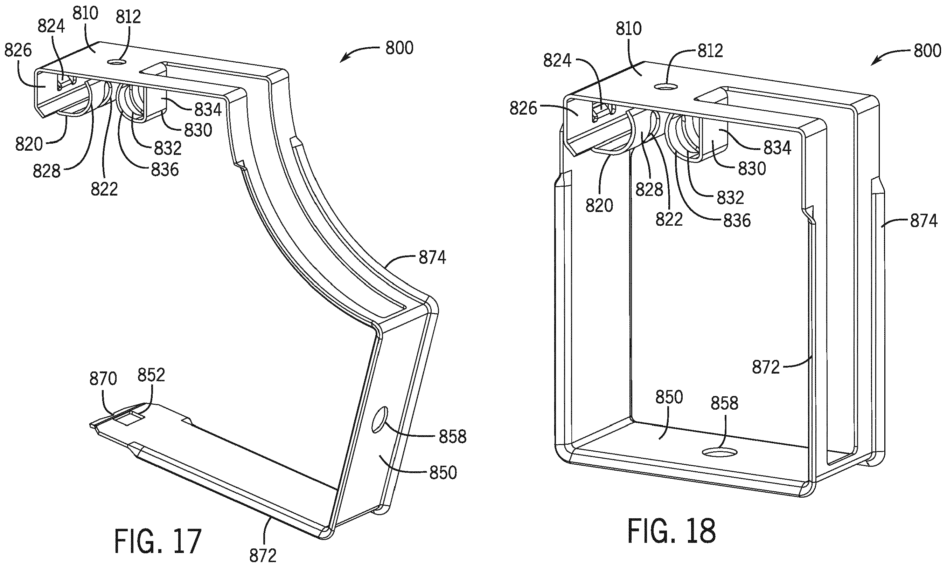

FIGS. 17 and 18 illustrate another bracket 800 according to an embodiment of the disclosure. In many aspects, the bracket 800 is similar to the bracket 100 described above and similar numbering in the 800 series is used for the bracket 800. For example, the bracket 800 has a contact member 810, a first arm 820 and a second arm 830 depending from the contact member 810, and a support member 850 coupled to the contact member 810, and the first and second arms 820, 830 share similar geometries and features as the first and second arms 120, 130 of the bracket 100 discussed above: i.e., the first and second arms 820, 830 extend from the contact member 810 in a similar manner as the first and second arms 120, 130, the first arm 820 includes a sidewall portion 826 and an arcuate portion 828 with a slot 822, and the second arm 830 includes a planar portion 834 and an arcuate portion 836 with a slot 832. Further, the support member 850 has a notch 870 configured to receive the barrel of the nail gun when the barrel is received between the first and second arms 820, 830. The bracket 800 is also configured to be moved from an open installation configuration (FIG. 17) to a closed support configuration (FIG. 18) and to be retained in the closed support configuration with the interlocking of a tab 824 and an aperture 852.

In some aspects, however, the bracket 800 differs from the bracket 100. For example, the bracket 800 exhibits a larger overall size, both in height and width, relative to the bracket 100. Correspondingly, in the illustrated example, the hole 812 is linearly spaced in one direction from the center of the contact member 810 and is not axially aligned with the attachment hole 858, as may allow the bracket 800 to be readily formed from stamping operations despite the increased overall size (and interior capacity). The bracket 800 also has rounded edges 872, 874 extending at least partially along the sides of the support member 850, similar to those provided in the bracket 700. As illustrated in FIGS. 17 and 18, the rounded edges 872, 874 extend along a portion of the first and second legs 854, 856 and along the support member 850 towards the aperture 852.

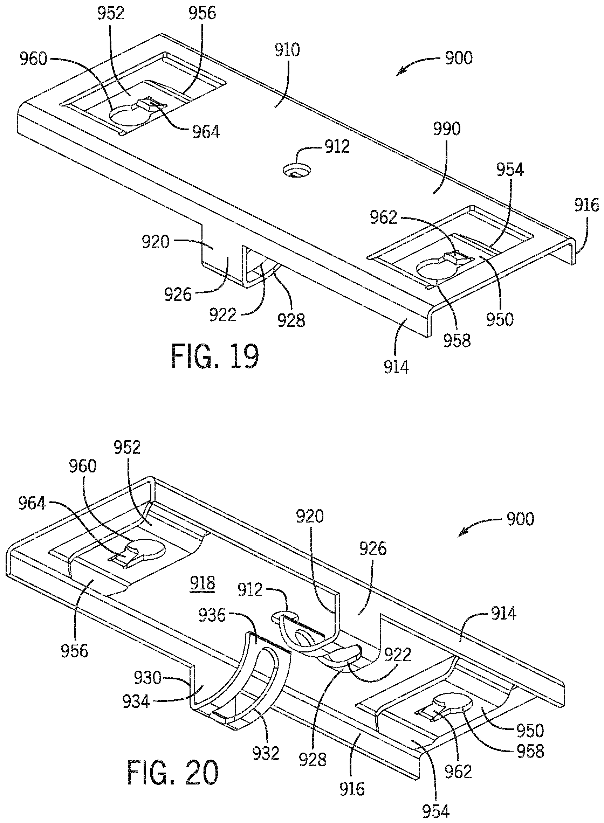

In some embodiments, the principles discussed above can be applied to other type of brackets, as can be used in a variety of different installations. For example, according to another embodiment of the disclosure shown in FIGS. 19-21, a mounting bracket 900 on which support clips 20, 22 can be removably mounted is provided. The mounting bracket 900 includes a contact member 910 with a hole 912, a first arm 920 and a second arm 930 extending from opposing edges the contact member 910, and a set of mounting features configured as retention clips 950, 952 also extending from the contact member 910, on opposing sides of the first and second arms 920, 930. Similar to the bracket 100 described above, the contact member 910, the first and second arms 920, 930, and the set of retention clips 950, 952 are integrally formed as part of a single component that can be formed from spring steel, or other material. The contact member 910 as shown is formed in a U-shape generally to provide addition strength across the mounting bracket 900, although other configurations are possible. The U-shape profile defining a set of lateral sidewalls 914, 916 extending from the long sides of a base 990 and parallel with each other.

The first arm 920 has a first arm planar portion 926 and a first arm arcuate portion 928. The first arm planar portion 926 extends downward from one of the lateral sidewalls 914 of the contact member 910. The first arm arcuate portion 928 extends inward from the distal end of the first arm planar portion 926 and bends upward toward an under surface 918 of the contact member 910 and continues to bend back in the direction of the first arm planar portion 926. The second arm 930 is positioned opposite from and facing the first arm 910. The second arm 930 is substantially similar to the first arm 920 and has a second arm planar portion 934 and a second arm arcuate portion 936. The second arm planar portion 934 extends downward from the other lateral sidewall 916 of the contact member 910 substantially parallel with the first arm planar portion 926, and the second arm arcuate portion 936 extends inward from the planar portion 934 bending inward toward the first arm 920, continuing to bend, along an arcuate path, toward the under surface 918 of the contact member 910, and continuing to bend back in the direction of the second arm planar portion 934 away from the first arm 920 and the first arm arcuate portion 928.

The first arm 920 has a first arm slot 922 extending along the first arm arcuate portion 928 and the second arm 930 has a second arm slot 932 extending along the second arm arcuate portion 936. The first arm slot 922 and the second arm slot 932 are configured to receive and retain a barrel of a nail gun when the barrel is clamped by the first and second arms 920, 930. As also generally discussed above, the seating of a barrel within the slots 922, 932, or other similar features can help to further secure the barrel for appropriate placement of the mounting bracket 900 and delivery of a nail to the hole 912. Additionally, the first arm slot 922 and the second arm slot 932 can substantially inhibit the nail gun barrel from moving in any direction parallel to the plane defined by the base 990 of the contact member 910 and further encourage axial alignment of the barrel with the hole 912 of the contact member 910.

In different embodiments, different types of retention features can be provided on a bracket similar to the bracket 900. In the illustrated embodiment, for example, the set of retention clips 950, 952 extend downward from the base 990 of the contact member 910 on either side of the first and second arms 920, 930. The set of retention clips 950, 952 are configured to slidably receive and thereafter retain support clips 20, 22 or other devices for the mounting bracket 900, so that users can easily selectively equip the bracket 900 for a particular installation.

Continuing, each of the retention clips 950, 952 has an entry lip 954, 956 that extends away from the under surface 918 to provide a larger entry point for the support clips 20, 22 to be received within the retention clips 950, 952. Each of the retention clips 950, 952 also has a retention aperture 958, 960 with a retention tab 962, 964 extending from the periphery of the respective retention aperture 958, 960 upwards in the direction of the under surface 918 and at least partially over the retention aperture 958, 960.

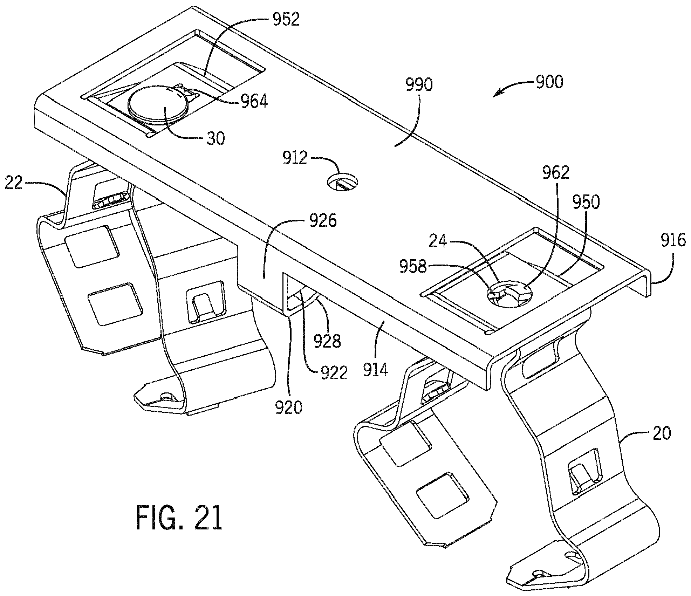

As shown in FIG. 21, support clips 20, 22 are received and retained by the retention clips 950, 952. The retention tab 962 of retention clip 950 extends into a hole 24 of the support clip 20 to retain the support clip 20 in place. The support clip 22 is secured to the retention clip 952 with a rivet 30 extending through both a hole in the support clip 22 and the retention aperture 960 (see FIGS. 19 and 20). The rivet 30 is an example of a type of fastener that can be used, other examples include threaded fastener assemblies such as nuts and bolts.

Although the support clips 20, 22 as shown may be particularly useful in some contexts, the illustrated configuration is presented as an example only. In other embodiments, other types of known support devices can be additionally or alternatively secured to a support bracket according to an embodiment of the disclosure similarly to the support clips 20, 22. Some embodiments, for example, can be configured to support pipe hangers, cable supports, brackets for cable trays or other cable management tools, and so on.

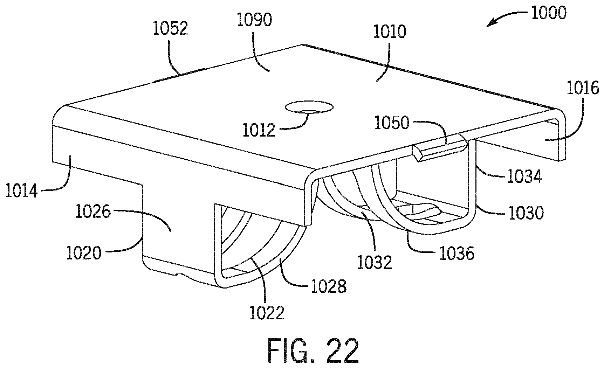

In some embodiments, brackets can be configured to be secured to substrates other than building structures, for combined attachment of the brackets and the substrates to the building structures. For example, FIG. 22 shows an insert bracket 1000 according to another embodiment of the disclosure. The insert bracket 1000 includes a contact member 1010 with a hole 1012, a first arm 1020 and a second arm 1030 extending from the contact member 1010, and a set of engaging tabs 1050, 1052 also extending from the contact member 1010. Similar to the bracket 900 described above, the contact member 1010, the first and second arms 1020, 1030, and the set of engaging tabs 1050, 1052 are integrally formed as part of a single component that can be formed from spring steel, or other material. The contact member 1010 is shown formed in a U-shape generally to provide addition strength across the insert bracket 1000, although other configurations are possible. The U-shape profile defining a set of lateral sidewalls 1014, 1016 extending from opposing sides of a base 1090 and parallel with each other.

Also similar to the mounting bracket 900, the first arm 1020 has a first arm planar portion 1026 and a first arm arcuate portion 1028. The first arm planar portion 1026 extends downward from one of the lateral sidewalls 1014 of the contact member 1010. The first arm arcuate portion 1028 extends inward from the distal end of the first arm planar portion 1026 and bends upward toward an under surface 1018 of the contact member 1010 and continues to bend back in the direction of the first arm planar portion 1026. The second arm 1030 is positioned opposite from and facing the first arm 1010. The second arm 1030 is substantially similar to the first arm 1020 and has a second arm planar portion 1034 and a second arm arcuate portion 1036. The second arm planar portion 1034 extends downward from the other lateral sidewall 1016 of the contact member 1010 substantially parallel with the first arm planar portion 1026, and the second arm arcuate portion 1036 extends inward from the planar portion 1034 bending inward toward the first arm 1020, continuing to bend, along an arcuate path, toward the under surface 1018 of the contact member 1010, and continuing to bend back in the direction of the second arm planar portion 1034 away from the first arm 1020 and the first arm arcuate portion 1028.

Further, the first arm 1020 has a first arm slot 1022 extending along the arcuate portion 1028 and the second arm 1030 has a second arm slot 1032 extending along the arcuate portion 1036 The first arm slot 1022 and the second arm slot 1032 are configured to receive and retain a barrel of a nail gun when the barrel is clamped by the first and second arms 1020, 1030 and align and secure the barrel of the nail gun in the same manner as described above with respect to the mounting bracket 900 (and other brackets presented above).

In some aspects, however, the insert bracket 1000 differs from the mounting bracket 900. For example, the insert bracket 1000 does not have retention clips 950, 952, instead having the set of engaging tabs 1050, 1052 extending oppositely from respective edges of the contact member 1010 adjacent the lateral sidewalls 1014, 1016.

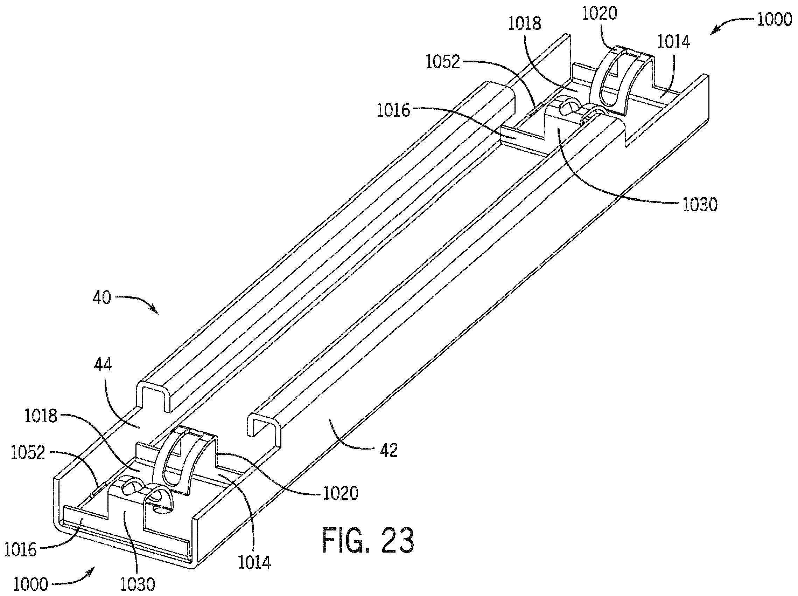

The engaging tabs 1050, 1052 are configured to engage sidewalls 42, 44 of a channel support 40, as shown in FIG. 23, to at least temporarily hold the insert bracket 1000 in place within the channel support 40. It is contemplated, however, that the insert bracket 1000 can also be configured to be inserted within the channel support 40 in an orientation rotated 90 degrees from that shown in FIG. 23.

In other embodiments, other configurations are possible. For example, certain features and combinations of features that are presented with respect to particular embodiments in discussion above, can be utilized in other embodiments and in other combinations, as appropriate. In this regard, for example, different configurations of engagement features, attachment mechanisms, and so on, as presented with respect to a particular one of the brackets 100, 200, 300, 400, 500, 700, 800, 900, 1000 can be implemented in combination with features of any number of the other brackets 100, 200, 300, 400, 500, 700, 800, 900, 1000 or others.

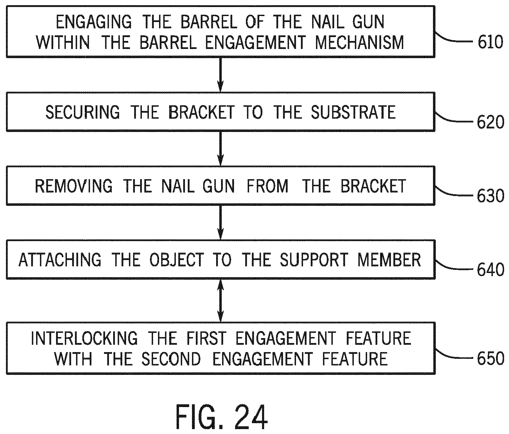

Some embodiments of the disclosure provide a method for securing an object to a substrate of concrete or other materials with a bracket and a nail gun. FIG. 24 illustrates an example method according to one embodiment of the present disclosure. In the illustrated example, the relevant nail gun includes a barrel that can exhibit any one of a wide range of sizes. The bracket includes a barrel engagement mechanism and a support member integrally formed with a contact member. The method includes engaging 610 the barrel of the nail gun within the barrel engagement mechanism to secure the nail gun to the bracket and align the barrel with the hole. In particular, for example, the barrel can be engaged 610 between opposing arcuate spring arms of the bracket, with the barrel extending within and axially along slots on the spring arms.

The bracket can then be secured 620 to the substrate with the nail gun, and because of the engagement of the barrel engagement mechanism with the barrel of the nail gun, no additional support of the bracket may be needed during this step. The nail gun can then be removed 630 from the bracket, such as by being axially withdrawn from between the spring arms, to allow the object to be attached 640 to the support member (as appropriate) and to free the nail gun for further operations. Additionally, in some embodiments, before or after attaching the object to the support member, a first engagement feature of the bracket can be interlocked 650 with a second engagement feature to secure the bracket in a closed support configuration.

With regard to operations to remove a nail gun from a bracket, certain configurations of arms of a bracket (e.g., arms 120, 130, 220, 230, etc.) can be particularly useful. For example, some of the arms discussed herein are configured to engage an exterior of a nail gun barrel based solely on elastic response and without mechanical latching (e.g., engagement of opposing shoulders). For a bracket with arms that have one or more of these characteristics, removing a nail gun barrel from the brackets can be relatively simple. In some cases, for example, the nail gun barrel can be relatively simply removed from a bracket that has been fixed to a support member simply by manually pulling the nail gun away (e.g., axially away) from the bracket and the support member.

Engagement of the exterior of a nail gun barrel can also be beneficial for reasons other than improved disengagement of the nail gun barrel from the bracket. For example, as noted above, resiliently flexible, slotted spring arms can readily engage a wide variety of barrel sizes and shapes via elastic response to the axial insertion of the nail gun barrel between the spring arms and into the slots. In some cases, the same degree of adaptability may not be possible with spring arms that engage an interior of a barrel or other feature. In this regard, the arcuate profile of the spring arms can also provide for easier initial engagement of a nail gun barrel. For example, the spring arms can be configured to exhibit a relatively narrow gap therebetween when in a resting state, with axial engagement of curved entry portions of the spring arms by the axial insertion of a nail gun barrel causing the spring arms to automatically adapt to an appropriate spacing for that particular barrel geometry.

Thus, embodiments of the disclosures can provide an improved bracket for securing objects (e.g., conduit or cables) to a substrate of concrete or other materials. In some embodiments, brackets according to the disclosure can substantially reduce the time and labor that may be required during installation and use, such as by obviating the need to hold the bracket with one hand and operate a nail gun with the other to secure the bracket to the substrate. Further, some embodiments of the disclosure can be releasably engaged with the barrel of the nail gun before positioning the bracket in place, thereby allowing for attachment of the bracket to a substrate in hard or difficult areas to reach, including instances in which a nail gun is attached to an extension pole to secure a bracket high overhead. Additionally, some embodiments of the disclosure can be used, without modification, on a variety of nail guns having respective barrels with a variety of sizes.

Although various example configurations are discussed above and specifically illustrated in the figures, other configurations are contemplated within the scope of this disclosure. In some embodiments, a bracket can include a contact member configured to be secured against the substrate, and first and second arms coupled to the contact member. The first arm can be include a sidewall portion extending from the contact member and an arcuate portion extending from the sidewall portion, the arcuate portion of the first arm having a first arm slot. The second arm can include a planar portion extending from the contact member in parallel with the sidewall portion and an arcuate portion extending from the planar portion opposite the contact member, the arcuate portion of the second arm having a second arm slot. The arcuate portions of the first and second arms can extend toward each other, then bend toward the contact member, and continue to bend away from each other, from a perspective extending from the sidewall portion and the planar portion, respectively, to free ends of the first and second arms. And the arcuate portions can be configured to receive and hold the barrel of the nail gun therebetween to secure the bracket to the nail gun for installation, with the first arm slot and the second arm slot receiving the barrel of the nail gun therein.

Additional or alternative features or configurations can be included alone or in various combinations. For example, the bracket can be integrally formed as a single spring steel component. The first arm and the second arm can be configured to engage the barrel of the nail gun to align the barrel with the first hole of the contact member. The first arm and the second arm can be biased towards each other, when the barrel of the nail gun is received therebetween, to induce a force onto the barrel of the nail gun to retain the bracket thereon. The bracket can further comprise a support member that is movable relative to the contact member to releasably interlock first and second engagement features (e.g., a tab and an aperture) to thereby secure the support member in a support configuration. A support member can include a notch configured to receive the barrel of a nail gun at a location that is spaced apart from the first and second arms, when the support member is in an installation configuration, to further secure the bracket to the nail gun for installation. A support member can have rounded outer edges. The sidewall portion of the first arm can extend from an edge of the contact portion and can form an outer side wall of the bracket.

As further examples, the contact member can have a set of anchor holes and support member can have a set of catches extending therefrom so multiple instances of the brackets are configured to be releasably connected with each other, with the set of catches of one of the brackets received within the set of anchor holes of the other of the brackets to form a stacked bracket assembly. The set of catches can include hooked tabs that extend in opposite directions, so that the one bracket is configured to be secured to another bracket by extending the set of hooked tabs into the set of anchor holes and rotating one or both of the brackets relative to each other.

In some embodiments, a bracket can include a contact member configured to be secured to the substrate with a nail and a barrel engagement mechanism coupled to the contact member. The barrel engagement mechanism can include spring arms that are coupled to the contact member and configured to releasably engage the barrel of the nail gun therebetween to secure the barrel in axial alignment with the hole. Each of the spring arms can have a slot configured to at least partially receive an exterior surface of the barrel of the nail gun to secure the bracket to the barrel for installation of the bracket onto the substrate with the nail gun

Additional or alternative features or configurations can be included alone or in various combinations. For example, the spring arms can be at least partly arcuate and bend inward toward each other and the contact member. A free end of each of the spring arms angles away from the free end of the other of the spring arms. The spring arms can extend from opposing edges of the contact member and the contact member can include mounting features on opposing sides of the spring arms, the mounting features being configured to secure additional support devices to the bracket. The contact member can be configured to be seated within a channel of a strut to secure the strut and the bracket to the barrel of the nail gun for installation of the bracket and the strut onto the substrate. The spring arms can extend from first opposing edges of the contact member and tabs configured to secure the bracket within a channel can extend from second opposing edges of the contact member.

In some embodiments, a method for securing an object to a substrate of concrete can include engaging the barrel of a nail gun with first and second spring arms of an integrally formed bracket so that the exterior of the barrel extends within and along first and second slots that extend along arcuate portions of the first and second spring arms. With the barrel engaged with the first and second spring arms, the bracket can then be secured to a substrate with the nail gun. After securing the bracket to the substrate, the nail gun can be removed from the bracket by pulling the barrel out of the first and second slots (e.g., by moving the nail gun only axially).

Additional or alternative operations or configurations can be included alone or in various combinations. For example, a method can further comprise, before securing the bracket to the substrate with the nail gun, engaging the barrel of the nail gun with a notch on a movable support member of the bracket at a location that is spaced apart from the first and second spring arms.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the devices described may be incorporated into/used in corresponding methods and vice versa.

The previous description of the disclosed embodiments is provided to enable any person skilled in the art to make or use the disclosure. Various modifications to these embodiments will be readily apparent to those skilled in the art, and the generic principles defined herein may be applied to other embodiments without departing from the spirit or scope of the disclosure. Thus, the disclosure is not intended to be limited to the embodiments shown herein but is to be accorded the widest scope consistent with the principles and novel features disclosed herein.

For the sake of completeness, it is also stated that the term "comprising" does not exclude other elements or steps, the term "a" or "an" does not exclude a plurality, a single unit may fulfil the functions of several means recited in the claims and any reference signs in the claims shall not be construed as limiting the scope of the claims.

## Claims

1. A bracket (700) for supporting an object relative to a substrate of concrete or other material, for use with a nail gun with a barrel (10), the bracket comprising:
a contact member (710) configured to be secured to the substrate with a nail fired by the nail gun; and
a barrel engagement mechanism that includes spring arms (720, 730) that are coupled to the contact member (710) and configured to releasably engage the barrel (10) of the nail gun therebetween to secure the barrel in axial alignment to secure the bracket (700) to the substrate, each of the spring arms (720, 730) having a slot (722, 732) configured to at least partially receive an exterior surface of the barrel (10) of the nail gun to secure the bracket (700) to the barrel (10) for installation of the bracket onto the substrate with the nail gun

2. The bracket of claim 1, wherein the spring arms (720, 730) are at least partly arcuate and bend inward toward each other and the contact member (710).

3. The bracket of any of the preceding claims, wherein a free end of each of the spring arms (720, 730) angles away from the free end of the other of the spring arms, and optionally or preferably, wherein arcuate portions (728, 736) of the spring arms extend toward each other, then bend toward the contact member (710), and continue to bend away from each other, from a perspective extending from the contact member (710) to the free ends of the spring arms (720, 730), respectively.

4. The bracket of any of the preceding claims, wherein a first arm (720) of the spring arms includes a sidewall portion (726) extending from the contact member and an arcuate portion (728) extending from the sidewall portion (726), the arcuate portion (728) of the first arm (720) having a first arm slot (722); and
wherein a second arm (730) of the spring arms includes a planar portion (734) extending from the contact member (710) in parallel with the sidewall portion (726) and an arcuate portion (736) extending from the planar portion (734) opposite the contact member (710), the arcuate portion (736) of the second arm having a second arm slot (732).

5. The bracket of claim 4, wherein the sidewall portion (726) of the first arm (720) extends from an edge of the contact member (710) and forms an outer side wall of the bracket (700).

6. The bracket of any of the preceding claims, further comprising:
a support member (750) that is movable relative to the contact member (710) from an installation configuration to a support configuration to releasably interlock first and second engagement features (724, 752) and thereby secure the support member (750) in the support configuration, and optionally or preferably wherein the support member (750) is closed to define an internal volume of the bracket (700) when in the support configuration.

7. The bracket of claim 6, wherein the support member (750) has a notch (770) configured to receive the barrel (10) of the nail gun at a location that is spaced apart from the spring arms (720, 730), when the support member (750) is in an installation configuration, to further secure the bracket (700) to the nail gun for installation.

8. The bracket of any of the preceding claims, wherein one of the contact member (710) or a support member (750) of the bracket (700) has one or more anchor holes (760, 762) and the other of the contact member (710) or the support member (750) has one or more catches (764, 766) extending therefrom; and
wherein one instance of the bracket (700) is configured to be releasably connected with another instance of the bracket (700), with the one or more catches (764, 766) of one of the brackets being received within the one or more anchor holes (760, 762) of the other of the brackets to form a stacked bracket assembly.

9. The bracket of claim 8, wherein the bracket includes one or more catches (764, 766) configured as hooked tabs that extend in opposite directions, so that the one of the brackets is configured to be secured to the other of the brackets by extending the hooked tabs into corresponding anchor holes and rotating one or both of the brackets relative to each other.

10. The bracket of claim 9, wherein the hooked tabs are formed as downwardly extending tabs on the support member (750).

11. The bracket of any of the preceding claims, for use with additional support devices (20, 22), wherein the spring arms (920, 930) extend from opposing edges of the contact member (910); and
wherein the contact member (910) includes mounting features (950, 952) on opposing sides of the spring arms (920, 930), the mounting features (950, 952) being configured to secure the additional support devices (20, 22) to the bracket (900), and optionally or preferably wherein the mounting features (950, 952) are formed as retention clips.

12. The bracket of any of claims 1 through 10, for use with a support (40) that has a channel with channel side walls (42, 44), wherein the contact member (1010) is configured to be seated within the channel to secure the support (40) and the bracket (1000) to the barrel (10) for installation of the bracket (1000) and the support (40) onto the substrate.

13. The bracket of claim 12, wherein the spring arms (1020, 1030) extend from first opposing edges of the contact member (1010); and
wherein tabs (1050, 1052) configured to secure the bracket (1000) within the channel extend from second opposing edges of the contact member (1010).

14. A method for securing an object to a substrate of concrete or other material using a nail gun, the method comprising:
engaging a barrel (10) of the nail gun with first and second spring arms (720, 730) of an integrally formed bracket (700) so that the exterior of the barrel (10) extends within and along first and second slots (722, 732) that extend along arcuate portions (728, 736) of the first and second spring arms (720, 730);
with the barrel (10) engaged with the first and second spring arms (720, 730), securing the bracket (700) to a substrate with the nail gun;
after securing the bracket (700) to the substrate, removing the nail gun from the bracket by pulling the barrel (10) out of the first and second slots (722, 732); and
attaching the object to the bracket (700).

15. The method of claim 14, further comprising:
before securing the bracket (700) to the substrate with the nail gun, engaging the barrel (10) of the nail gun with a notch (770) on a movable support member (750) of the bracket (700) at a location that is spaced apart from the first and second spring arms (720, 730).
